**Europäisches Patentamt**

**European Patent Office**

**Office européen des brevets**

(11) Veröffentlichungsnummer: **0 463 468 A1**

## (12) EUROPÄISCHE PATENTANMELDUNG

(21) Anmeldenummer: **91109576.8**

(22) Anmeldetag: **11.06.91**

(51) Int. Cl.5: **G01N 35/06**, B01L 3/02

(30) Priorität: **22.06.90 CH 2087/90**

(43) Veröffentlichungstag der Anmeldung:
**02.01.92 Patentblatt 92/01**

(84) Benannte Vertragsstaaten:
**CH DE FR GB IT LI NL**

(71) Anmelder: **F. HOFFMANN-LA ROCHE AG**
**Postfach 3255**
**CH-4002 Basel(CH)**

(72) Erfinder: **Fassbind, Walter**
**Feldbergstrasse 14a**
**CH-6319 Allenwinden(CH)**

(74) Vertreter: **Ventocilla, Abraham et al**
**Grenzacherstrasse 124 Postfach 3255**
**CH-4002 Basel(CH)**

(54) **Kopplungsvorrichtung für Pipettiernadel.**

(57) Kopplungsvorrichtung zum Koppeln einer Pipettiernadel (17) zur Dosiervorrichtung (11) eines Pipettiersystems.

Damit die Pipettiernadel und andere Teile der Kopplungsvorrichtung auf sehr einfache Weise einzeln ausgewechselt werden können, ist die Kopplungsvorrichtung dadurch gekennzeichnet, dass sie folgende Komponenten enthält:

(a) ein Gehäuse (15), das aus zwei miteinander trennbar verbundenen Teilen (21, 22) besteht und das Mittel zur Aufnahme und zur trennbaren Befestigung eines Endteils (31) der Pipettiernadel (17) an dem Gehäuse (15) und einen ersten Anschluss (18) enthält, durch den eine trennbare Verbindung der Kopplungsvorrichtung und die Dosiervorrichtung (11) des Pipettiersystems über einen Schlauch (16) herstellbar ist, und

(b) ein Schlauchsegment (23), dessen eines Ende mit einem Ende des ersten Anschlusses (18) und dessen anderes Ende durch einen zweiten Anschluss (19) mit dem an dem Gehäuse (15) befestigten Endteil (31) der Pipettiernadel (17) trennbar verbunden ist.

Fig. 1

Rank Xerox (UK) Business Services

Die Erfindung betrifft eine Kopplungsvorrichtung zum Koppeln einer Pipettiernadel zur Dosiervorrichtung eines Pipettiersystems.

Die Erfindung betrifft ferner eine automatische Pipettiervorrichtung welche eine erfindungsgemässe Kopplungsvorrichtung enthält, wobei die automatische Pipettiervorrichtung eine auf einem bewegbaren Arm angeordnete Dosiervorrichtung und eine mit dieser über einen Schlauch verbundenen Pipettiernadel enthält, die durch einen Transportsystem in drei zueinander senkrechten Richtungen bewegbar ist.

In einem bekannten Analysensystem ist die Pipettiernadel fest mit einer Kassette verbunden. Diese beide Teile bilden eine Pipettiernadel-Kassette-Einheit, wobei die Pipettiernadel durch die Kassette und über einen Schlauch mit der Dosiervorrichtung des Pipettiersystems trennbar verbunden ist. Dieser Schlauch ist durch ein in der Kassette enthaltenes Schlauchsegment mit der Pipettiernadel verbunden. Bei der in Analysensystemen z.B. für die klinische Chemie üblichen Pipettierung biologischer Flüssigkeiten kommt relativ häufig vor, dass das in der Kassette enthaltene Schlauchsegment durch die pipettierten biologischen Flüssigkeiten kontaminiert wird, und deshalb ausgewechselt werden muss. Andererseits kann die Pipettiernadel mit der Zeit verstopft oder beschädigt werden. Hauptsächlich aus diesen Gründen ist es erforderlich, das Schlauchsegment und/oder die Pipettiernadel nach Bedarf auswechseln zu können. Aus Kostengründen ist es erwünscht, diese Komponenten einzeln und auf möglichst einfache Weise auswechseln zu können. Für den Benutzer ist dies jedoch mit der im Stand der Technik bekannten Pipettiernadel-Kassette-Einheit nicht möglich, weil diese eine geschlossene Einheit ist, die ein Auswechseln der Pipettiernadel oder des in der Kassette enthaltenen Schlauchsegments nicht erlaubt. Jedesmal dass eine dieser Teile ausgewechselt werden muss, muss also die ganze Pipettiernadel-Kassette-Einheit ersetzt werden. Dadurch werden die Betriebskosten des Analysensystems erheblich erhöht.

Der Erfindung liegt daher die Aufgabe zugrunde, eine Kopplungsvorrichtung der eingangs angegebenen Art zur Verfügung zu stellen, mit der die oben erwähnten Nachteile der bekannten Pipettiernadel-Kassette-Einheit beseitigt werden können.

Erfindungsgemäss wird diese Aufgabe durch eine Kopplungsvorrichtung der eingangs angegebenen Art gelöst, die dadurch gekennzeichnet ist, dass sie

(a) ein Gehäuse, das aus zwei miteinander trennbar verbundenen Teilen besteht, Mittel zur Aufnahme und zur trennbaren Befestigung eines Endteils der Pipettiernadel an dem Gehäuse und einen ersten Anschluss enthält, durch den eine trennbare Verbindung der Kopplungsvorrichtung an die Dosiervorrichtung des Pipettiersystems über einen Schlauch herstellbar ist, und

(b) ein Schlauchsegment, dessen eines Ende mit einem Ende des Anschlusses und dessen anderes Ende durch einen zweiten Anschluss mit dem an dem Gehäuse befestigten Endteil der Pipettiernadel trennbar verbunden ist.

Der wesentliche mit der erfindungsgemässen Kopplungsvorrichtung erzielte Vorteil, liegt darin, dass sie ermöglicht, die Pipettiernadel oder das Schlauchsegment oder das Gehäuse auf sehr einfache Weise einzeln auswechseln zu können. Durch die Benutzung einer erfindungsgemässen Kopplungsvorrichtung kann daher das im Stand der Technik erforderliche, relativ häufige Auswechseln einer ganzen Pipettiernadel-Kassette-Einheit vermieden werden. Dadurch wird eine erhebliche Verringerung der Betriebskosten des Analysensystems erzielt.

In einer bevorzugten Ausführungsform ist das Schlauchsegment ausserhalb des Gehäuses angeordnet. Diese Anordnung erleichtert ein Auswechseln des Schlauchsegments.

In einer weiteren bevorzugten Ausführungsform enthält das Gehäuse einen elektrischen Anschluss, durch den die Pipettiernadel an eine Niveau-Fühlanordnung anschliessbar ist.

Im Rahmen der Erfindung ist ferner eine automatische Pipettiereinrichtung vorgesehen, die eine erfindungsgemässe Kopplungsvorrichtung, eine auf einem bewegbaren Arm angeordnete Dosiervorrichtung und eine mit dieser über einen Schlauch verbundenen Pipettiernadel enthält, die durch einen Transportsystem in drei zueinander senkrechten Richtungen bewegbar ist. Erfindungsgemäss ist die automatische Pipettiervorrichtung daher dadurch gekennzeichnet, dass zwischen dem einen Ende des Schlauchs und einem Endteil der Pipettiernadel eine Kopplungsvorrichtung angeordnet ist, welche folgende Komponenten enthält:

(a) ein Gehäuse, das aus zwei miteinander trennbar verbundenen Teilen besteht, Mittel zur Aufnahme und zur trennbaren Befestigung eines Endteils der Pipettiernadel an dem Gehäuse und einen ersten Anschluss enthält, durch den eine trennbare Verbindung der Kopplungsvorrichtung an die Dosiervorrichtung des Pipettiersystems über einen Schlauch herstellbar ist, und

(b) ein Schlauchsegment, dessen eines Ende mit einem Ende des Anschlusses und dessen anderes Ende durch einen zweiten Anschluss mit dem an dem Gehäuse befestigten Endteil der Pipettiernadel trennbar verbunden ist.

Weitere Vorteile und Eigenschaften der vorliegenden Erfindung gehen aus der nachstehenden Beschreibung eines Ausführungsbeispiels hervor, das anhand der beiliegenden Zeichnungen erläutert wird.

Es zeigen

Fig. 1 eine schematische Darstellung einer erfindungsgemässen Kopplungsvorrichtung und ihrer Anschlüsse zur Dosiervorrichtung eines Pipettiersystems,

Fig. 2 eine explodierte, perspektivische Ansicht einer bevorzugten Ausführungsform einer erfindungsgemässen Kopplungsvorrichtung,

Fig. 3 eine Ansicht der Kopplungsvorrichtung gemäss Fig. 2 nach Verbindung der oberen und unteren Gehäuseteile 21, 22 mittels der Scharnierverbindung 26, 27,

Fig. 4 eine perspektivische Ansicht der Kopplungsvorrichtung gemäss Fig. 2 nach der Zusammensetzung und dem Schliessen des Gehäuses 15 mittels der Verschlussschraube 24,

Fig. 5 einen Längsschnitt der Verschlussschraube 24 und der damit verbundenen Teile zur Bildung der Anschlüsse zum Schlauch 16 und zum Schlauchsegment 23,

Fig. 6 eine Darstellung der Pipettiernadel 17 und deren Anschluss 19 zum Schlauchsegment 23, und

Fig. 7 eine perspektivische Ansicht einer automatischen Pipettiervorrichtung, die eine erfindungsgemässe Kopplungsvorrichtung enthält.

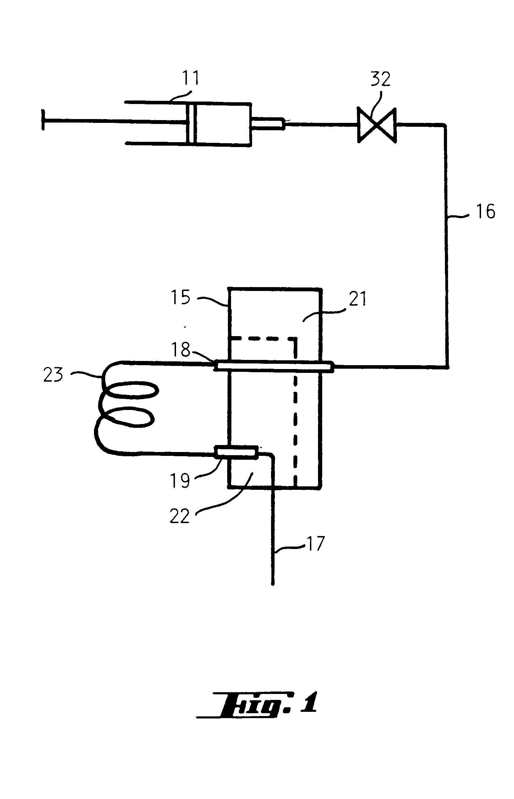

Wie in der Fig. 1 dargestellt, dient eine erfindungsgemässe Kopplungsvorrichtung dazu, eine Pipettiernadel 17 zur Dosiervorrichtung 11 eines Pipettiersystems zu koppeln. Die Kopplungsvorrichtung besteht im wesentlichen aus einem Gehäuse 15, einem ersten Anschluss 18, einem zweiten Anschluss 19 und einem Schlauchsegment 23.

Das Gehäuse 15 besteht aus einem oberen Teil 21 und einem unteren Teil 22, die miteinander trennbar verbunden sind. Das Gehäuse 15 enthält Mittel zur Aufnahme und zur trennbaren Befestigung eines Endteils 31 der Pipettiernadel 17 an dem Gehäuse 15. Durch ein Ende des ersten Anschlusses 18 ist eine trennbare Verbindung der Kopplungsvorrichtung an die Dosiervorrichtung 11 des Pipettiersystems über einen Schlauch 16 herstellbar. In einer bevorzugten Ausführungsform ist ein Ventil 32 zwischen der Kopplungsvorrichtung und der Dosiervorrichtung 11 eingeschaltet. Durch dieses Ventil kann die Kopplungsvorrichtung wahlweise an die Dosiervorrichtung oder an eine nicht dargestellte Waschpumpe angeschlossen werden. Ein Ende des Schlauchsegments 23 ist mit dem Anschluss 18 und dadurch mit dem Schlauch 16 trennbar verbunden. Das andere Ende des Schlauchsegments 23 ist mit dem zweiten Anschluss 19 und dadurch mit dem Endteil 31 der Pipettiernadel 17 trennbar verbunden, der an dem Gehäuse 15 trennbar verbunden ist.

Wie in Fig. 1 dargestellt, ist in einer bevorzugten Ausführungsform das Schlauchsegment 23 ausserhalb des Gehäuses 15 angeordnet.

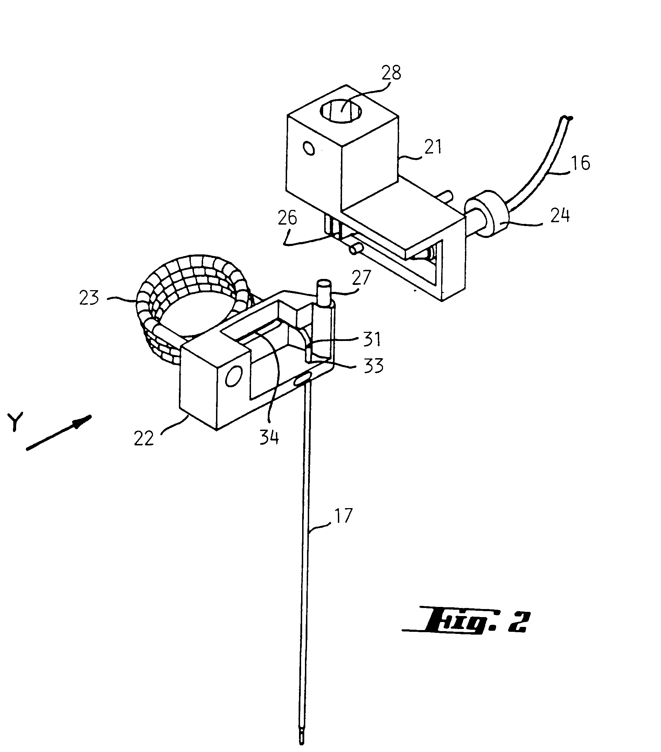

Fig. 2 zeigt eine explodierte, perspektivische Ansicht einer bevorzugten Ausführungsform einer erfindungsgemässen Kopplungsvorrichtung. In dieser Ausführungsform haben die Teile 21 bzw. 22 des Gehäuses 15 korrespondierende Scharnierteile 26 bzw. 27 und eine Verschlussschraube 24. Das obere Gehäuseteil 21 hat ein Verbindungsstück 28, durch das das Gehäuse 15 mit einem Trägerarm des Pipettiersystems trennbar verbunden werden kann. Nach Zusammensetzen der beiden Teile 21, 22 wird das Gehäuse mittels der Schraube 24 verschlossen. Die Schraube 24 hat ausserdem die Funktion des Anschlusses 18 in Fig. 1, d.h. sie verbindet den Schlauch 16 mit dem Schlauchsegment 23. Das untere Gehäuseteil 22 enthält die Mittel zur Aufnahme und zur trennbaren Befestigung eines Endteils 31 der Pipettiernadel 17 an dem Gehäuse 15. Diese Mittel sind im wesentlichen eine Böhrung 33 im Boden des Gehäuseteils 21 und einen Schlitz 34 in einer Seitenwand dieses Teils. Die Nadel 17 wird durch die Bohrung 33 eingeführt. In der in Fig. 2 gezeigte Anordnung ragt der obere Endteil 31 der Nadel 17 durch den Schlitz 34 aus dem Gehäuse und ist mit einem Ende des Schlauchsegments 23 trennbar verbunden.

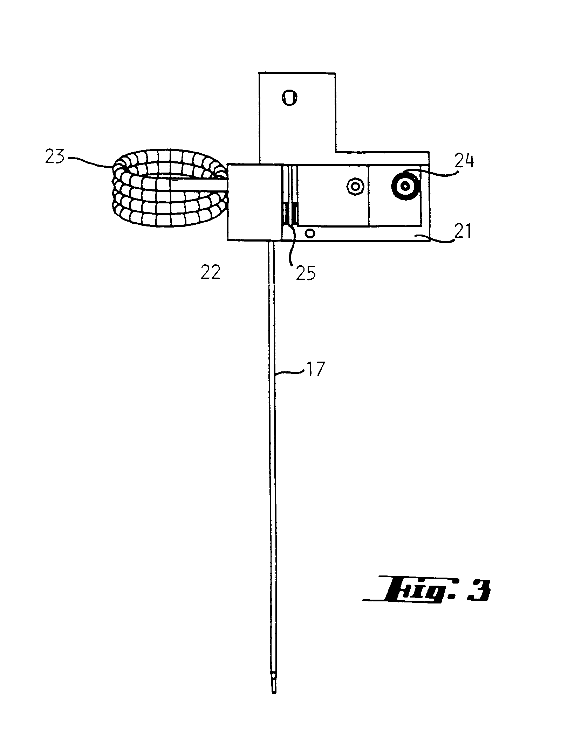

Die Fig. 3 zeigt eine Ansicht der Kopplungsvorrichtung gemäss Fig. 2 in der Richtung Y nach Verbindung der oberen und unteren Gehäuseteile 21, 22 mittels der Scharnierteile 26, 27. Es ist aus dieser Figur ersichtlich, dass der Gehäuseteil 21 vorzugsweise einen elektrischen Anschluss 25 enthält, durch den die Pipettiernadel 17 an eine nicht dargestellte Niveau-Fühlanordnung anschliessbar ist.

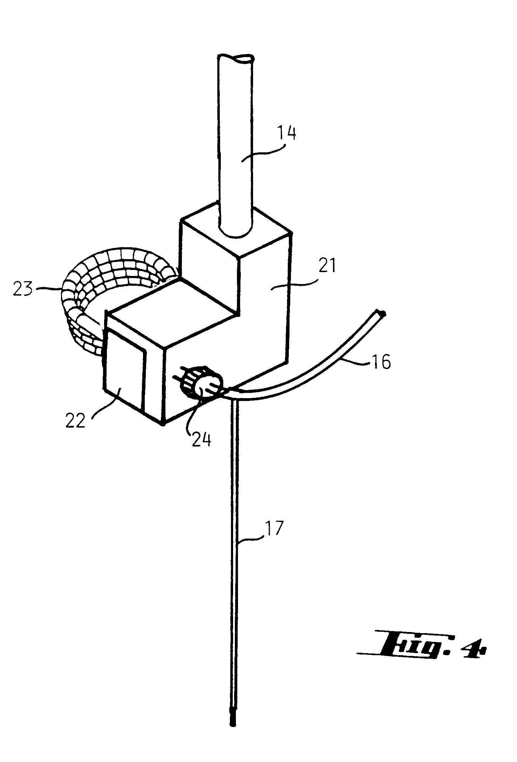

Fig. 4 zeigt eine perspektivische Ansicht der Kopplungsvorrichtung gemäss Fig. 2 nach Zusammensetzung und Schliessen des Gehäuses 15 mittels der Verschlussschraube 24. Es ist aus Fig. 4 ersichtlich, dass das Gehäuse 15 mit einer Säule 14 verbunden ist, die von einem nicht dargestellten Trägerarm eines Pipettiersystems getragen wird.

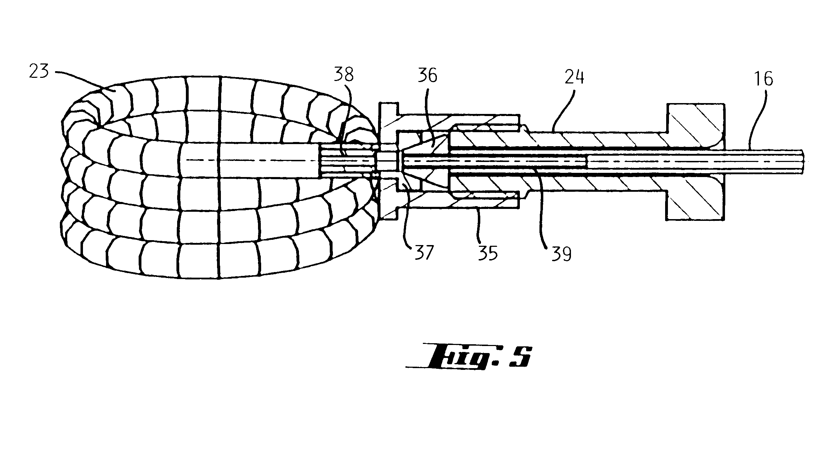

Fig. 5 zeigt ein Längsschnitt der Verschlussschraube 24, der entsprechenden Mutter 35, Dichtungsringe 36 und 37, ein im Dichtungsring 36 fest eingesetzten Röhrchen 39 und einen mit dem Dichtungsring 37 verbundenen Anschlusteil 38 . Alle diese Teile bilden den in Fig. 1 schematisch dargestellten Anschluss 18 zwischen dem Schlauch 16 und dem Schlauchsegment 23. Die Verbindung zwischen der Schraubenmutter 36 und dem unteren Gehäuseteil 22 kann eine feste oder eine trennbare Verbindung sein. Der Anschlussteil 38 und die Schraubenmutter 35 sind vorzugsweise in einem Stück hergestellt. In diesem Fall ist der Dichtungsring 37 einen separater Teil. Alternativ können der Anschlussteil 38 und der Dichtungsring 37 in einem Stück hergestellt werden. In diesem Fall ragt der Anschlussteil 38 durch eine Oeffnung der Mutter 35. Der Dichtungsring 36 und das Röhrchen 39 sind vorzugsweise in einem Stück hergestellt.

Das in Fig. 5 gezeigte Ende des Schlauchs 16 wird über ein Endsegment des Röhrchens 39 aufgestülpt, so dass eine ausreichend abgedichtete Verbindung zwischen diesen Komponenten gebildet wird. Das in Fig. 5 gezeigte Ende des Schlauchsegments 23 wird über ein Endsegment des Anschlussteils 38 aufgestülpt, so dass eine ausreichend abgedichtete Verbindung zwischen diesen Komponenten gebildet wird.

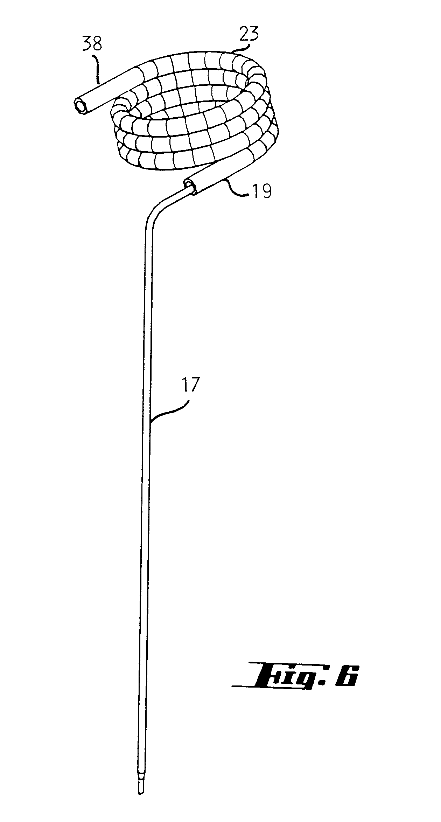

Die Fig. 6 zeigt eine Darstellung der Pipettiernadel 17 und deren Anschluss 19 zum Schlauchsegment 23. Ein Ende des Schlauchsegments 23 wird über ein Endsegment des Anschlusses 19 aufgestülpt, so dass eine ausreichend abgedichtete Verbindung zwischen diesen Komponenten gebildet wird. Fig. 6 zeigt ausserdem den Anschlussteil 38 der Verbindung zwischen dem Schlauchsegment 23 und dem Schlauch 16.

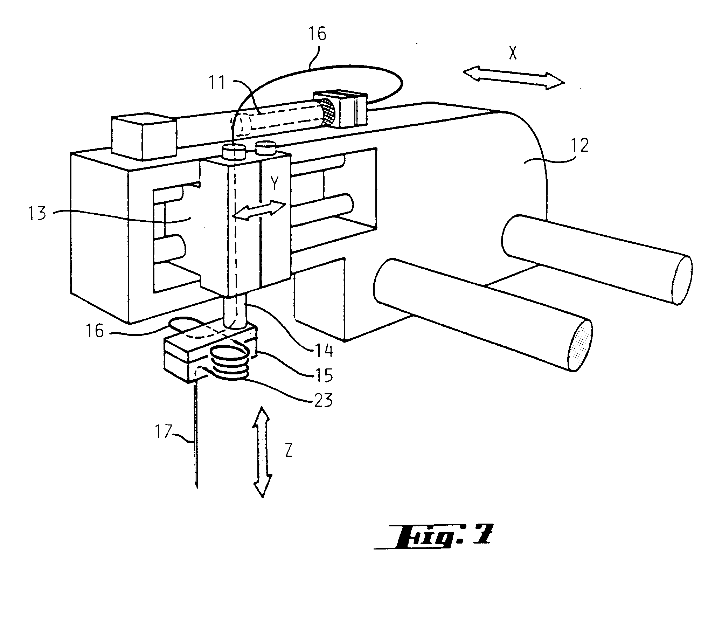

Die Fig. 7 zeigt eine perspektivische Ansicht einer automatischen Pipettiervorrichtung, die eine erfindungsgemässe Kopplungsvorrichtung enthält. Der Einfachkeits halber ist in Fig. 7 das Gehäuse 15 der Kopplungsvorrichtung nur schematisch dargestellt und entspricht nicht im Detail der oben beschriebene Ausführungsform gemäss den Figuren 2-6. Diese Pipettiervorrichtung enthält einen in X-Richtung bewegbaren Arm 12. Auf diesem Arm ist eine Dosiervorrichtung 11 angeordnet. Entlang des Armes 12 ist ein Wagen 13 in Richtung Y bewegbar. Der Wagen 13 trägt eine Säule 14, die in der Richtung Z bewegbar ist. Das Gehäuse 15 einer erfindungsgemässen Kopplungsvorrichtung ist mit der Säule 14 trennbar verbunden. Der Arm 12, der Wagen 13 und die Säule 14 sind Teile eines Transportsystems, durch das die Pipettiernadel 17 in drei zueinander senkrechten Richtungen X, Y, Z bewegbar ist. Vorzugsweise liegen zwei dieser Richtungen, z.B. X und Y, in einer horizontalen Ebene. Aus der Fig. 7 ist ferner die Anordnung des Schlauchsegments 23 und des Schlauchs 16 ersichtlich.

Zur Durchführung von Pipettierungen mit der automatischen Pipettiervorrichtung wird der Kolbendruck der Dosiervorrichtung auf die pipettierten Volumina vorzugsweise mittels einer Flüssigkeit, z.B. destilliertes Wasser, übertragen.

Das Gehäuse 15 wird vorzugsweise aus einem Kunststoff hergestellt, der für die Herstellung durch ein Spritzgusverfahren geeignet ist. Das Schlauchsegment 23 ist vorzugsweise aus Polytetrafluorethylen (PTFE). Die Verbindungen zwischen der Pipettiernadel 17 und dem Schlauchsegment 23 bzw. zwischen dem Schlauchsegment 23 und dem Schlauch 16 werden vorzugsweise aus Polypropylen oder aus einem anderen Kunststoff, der für die Herstellung durch ein Spritzgusverfahren geeignet ist. Die Pipettiernadel ist z.B. aus korrosionsbeständigem Stahl. Das Material der Pipettiernadel ist jedoch für die Funktion der Kopplungsvorrichtung und der verwendeten Anschlüsse irrelevant.

**Patentansprüche**

1. Kopplungsvorrichtung zum Koppeln einer Pipettiernadel (17) zur Dosiervorrichtung (11) eines Pipettiersystems, dadurch gekennzeichnet, dass sie folgende Komponenten enthält:

    (a) ein Gehäuse (15), das aus zwei miteinander trennbar verbundenen Teilen (21, 22) besteht und das Mittel zur Aufnahme und zur trennbaren Befestigung eines Endteils (31) der Pipettiernadel (17) an dem Gehäuse (15) und einen ersten Anschluss (18) enthält, durch den eine trennbare Verbindung der Kopplungsvorrichtung und die Dosiervorrichtung (11) des Pipettiersystems über einen Schlauch (16) herstellbar ist, und

    (b) ein Schlauchsegment (23), dessen eines Ende mit einem Ende des ersten Anschlusses (18) und dessen anderes Ende durch einen zweiten Anschluss (19) mit dem an dem Gehäuse befestigten Endteil (31) der Pipettiernadel (17) trennbar verbunden ist.

2. Kopplungsvorrichtung gemäss Anspruch 1, dadurch gekennzeichnet, dass das Schlauchsegment (23) ausserhalb des Gehäuses (15) angeordnet ist.

3. Kopplungsvorrichtung gemäss Anspruch 1, dadurch gekennzeichnet, dass das Gehäuse (15) einen elektrischen Anschluss (25) enthält, durch den die Pipettiernadel (17) an eine Niveau-Fühlanordnung anschliessbar ist.

4. Automatische Pipettiervorrichtung mit einer auf einem bewegbaren Arm (12) angeordneten Dosiervorrichtung (11) und eine mit dieser über einen Schlauch (16) verbundenen Pipettiernadel (17), die durch einen Transportsystem in drei zueinander senkrechten Richtungen bewegbar ist, dadurch gekennzeichnet, dass zwischen dem einen Ende des Schlauchs (16) und einem Endteil (31) der Pipettiernadel (17) eine Kopplungsvorrichtung (15) angeordnet ist, welche folgende Komponenten enthält:

(a) ein Gehäuse (15), das aus zwei miteinander trennbar verbundenen Teilen (21, 22) besteht, das Mittel zur Aufnahme und zur trennbaren Befestigung eines Endteils (31) der Pipettiernadel (17) an dem Gehäuse (15) und einen ersten Anschluss (18) enthält, durch den eine trennbare Verbindung der Kopplungsvorrichtung an die Dosiervorrichtung (11) des Pipettiersystems über einen Schlauch (16) herstellbar ist, und

(b) ein Schlauchsegment (23), dessen eines Ende mit einem Ende des Anschlusses (18) und dessen anderes Ende durch einen zweiten Anschluss (19) mit dem an dem Gehäuse (15) befestigten Endteil (31) der Pipettiernadel (17) trennbar verbunden ist.

5. Automatische Pipettiervorrichtung gemäss Anspruch 1, dadurch gekennzeichnet, dass das Schlauchsegment (23) ausserhalb des Gehäuses (15) angeordnet ist.

6. Automatische Pipettiervorrichtung gemäss Anspruch 1, dadurch gekennzeichnet, dass das Gehäuse (15) einen elektrischen Anschluss (25) enthält, durch den die Pipettiernadel (17) an eine Niveau-Fühlanordnung anschliessbar ist.

_Fig. 1_

Fig. 2

*Fig. 3*

*Fig. 4*

_Fig. 5_

EP 0 463 468 A1

Fig. 6

*Fig: 7*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | ANALYTICAL BIOCHEMISTRY, Band 52, Nr. 2, April 1973, Seiten 336-341, New York, NY, US; A. HENVILLE et al.: "A simple and cheap remotely-operated system for the iodination of proteins" * Figuren 1,2a,2b; Seiten 336-338, Abschnitt: "Methods: Apparatus" * | 1,2,4,5 | G 01 N 35/06 B 01 L 3/02 |
| | − − − | | |
| A | US-A-3 747 412   (A.R. JONES et al.) * Figuren 1-7; Spalte 3, Zeile 59 - Seite 4, Zeile 40 * | 1,2,4,5 | |
| | − − − | | |
| A | US-A-3 712 794   (A.F. FARR) * Spalte 4, Zeilen 28-42; Figur 11 * | 1,4 | |
| | − − − | | |
| A | EP-A-0 072 558   (TECAN AG) * Ganzes Dokument * | 1,3,4,6 | |
| | − − − | | |
| A | EP-A-0 202 022   (CAVRO SCIENTIFIC INSTRUMENTS) − − − | | |
| A | PATENT ABSTRACTS OF JAPAN, Band 12, Nr. 143 (C-492)[2990], 30. April 1988; & JP-A-62 262 751 (NIPPON TECTRON) 14-11-1987 − − − − − | | |

|  | RECHERCHIERTE SACHGEBIETE (Int. Cl.5) |
|---|---|
| | G 01 N B 01 L |

Der vorliegende Recherchenbericht wurde für alle Patentansprüche erstellt

| Recherchenort | Abschlußdatum der Recherche | Prüfer |
|---|---|---|
| Den Haag | 18 September 91 | HODSON C.M.T. |